# EUROPEAN PATENT APPLICATION

(11) **EP 4 679 638 A1**
(43) Date of publication of application: **14.01.2026**
(21) Application number: 24188114.3
(22) Date of filing: 11.07.2024
(51) Int. Cl.: H01R 9/05, H01R 24/38, H01R 103/00

(54) **A BUS BAR ASSEMBLY COMPRISING A BUS BAR AND A CONNECTOR**

(71) Applicant: VOLVO TRUCK CORPORATION, 405 08 Göteborg (SE)
(72) Inventor: SERRA DALMAU, Albert, 416 72 Göteborg (SE); IRANNEZHAD, Mike, 413 30 Göteborg (SE)
(74) Representative: Valea AB

(57) **Abstract**

A bus bar assembly 4, comprising a bus bar 6 and a connector 8. The bus bar comprising a conductor 10, extending axially along a centerline C, a first layer 16, extending coaxially with the centerline, and radially outer to the conductor. The connector comprises a first end 12 and a second end 14, the connector extending along an axis D, between the first end and the second end. The connector further comprising a first collar part 20, extending coaxially with the axis, and radially outer to the axis, and wherein a portion of the conductor extends radially inner to the first collar part, such that the conductor extends through the first collar part via the first end of the connector. A first direction D1 acts along the axis from the second end towards the first end and the first collar part comprises a first flange 24 extending coaxially with the axis in the first direction, and radially outer to the axis, and wherein the first layer of the bus bar is fitted radially outer to the first flange.

## Description

### TECHNICAL FIELD

The disclosure relates generally to a bus bar assembly. In particular aspects, the disclosure relates to a bus bar assembly comprising a bus bar and a connector. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is often necessary for a bus bar to comprise an outer layer, for the purpose of protecting a conductor thereof, which is configured to carry a current. In at least some examples the outer layer may be for the purpose of electrical insulating the conductor and/or protection from moisture. Furthermore, it may be convenient to have a bus bar assembly comprising a bus bar and a connector, such that the bus bar may be connected mechanically and/or electrically to a further component. There may exist a problem whereby an outer layer of a bus bar may not be adequately connected to the connector. Therefore, there is a need to develop improved technology relating to such bus bar assemblies.

### SUMMARY

According to a first aspect of the disclosure, a bus bar assembly, comprising a bus bar and a connector. The bus bar comprising a conductor, extending axially along a centerline, and a first layer, extending coaxially with the centerline, and radially outer to the conductor with respect to the centerline. The connector comprises a first end and a second end, the connector extending along an axis, between the first end and the second end. The connector further comprises a first collar part, extending coaxially with the axis, and radially outer to the axis, and wherein a portion of the conductor extends radially inner to the first collar part with respect to the axis, such that the conductor extends through the first collar part via the first end of the connector, wherein a first direction acts along the axis from the second end towards the first end and the first collar part comprises a first flange extending coaxially with the axis in the first direction, and radially outer to the axis, and wherein the first layer of the bus bar is fitted radially outer to the first flange.

The first aspect of the disclosure may seek to provide a bus bar assembly having an improved connection between the first layer and the connector. A technical benefit may include, by fitting the first layer radially outer to the first flange, whilst the conductor extends radially inner to the first flange a relative radial movement between the conductor and the first layer may occur whilst maintaining a connection between the first layer and the connector.

In at least some examples the bus bar comprises a bus bar pipe. In at least some examples at least a portion of the conductor may be configured as a terminal. The terminal may comprise a portion of the conductor configured for being electrically connected thereto. In at least some examples at least a portion of the terminal may coincide with the connector along the axis. In at least some examples the second end may be spaced from at least a portion of the terminal in the second direction along the axis. In at least some examples at least a portion of the centerline may coincide with the axis. In at least some examples the centerline may be movable relative to the axis.

Optionally in some examples, including in at least one preferred example, the first layer of the bus bar comprises an electrical insulator. A technical benefit may include an electrical insulation of the conductor may be achieved. Furthermore in at least some examples the first layer of the bus bar may be waterproof such that the conductor may be protected from moisture.

Optionally in some examples, including in at least one preferred example, the first collar part comprises an electrical insulator. A technical benefit may include the conductor may be electrically isolated from the connector.

Optionally in some examples, including in at least one preferred example, the bus bar assembly further comprises a first clamping member configured to circumferentially clamp the first layer of the bus bar to the first flange. A technical benefit may include radial movement of the first layer in a direction away from the first flange may be restricted. In at least some examples the first clamping member may comprise a hose clamp. Alternatively, in at least some examples the first layer may be fixed to the first flange by welding, or by use of adhesive.

Optionally in some examples, including in at least one preferred example, the first flange comprises a protrusion extending radially inwards towards the axis and the conductor of the bus bar comprises a complementary recess and wherein the protrusion extends into the recess. A technical benefit may include a relative axial movement between the first layer and the first flange may be restricted.

Optionally in some examples, including in at least one preferred example, the bus bar comprises a second layer, extending coaxially with the centerline, and radially outer to the first layer with respect to the centerline. A technical benefit may include further protection of the conductor may be achieved.

Optionally in some examples, including in at least one preferred example, the second layer of the bus bar is configured as an electromagnetic shield. A technical benefit may include electromagnetic interference and/or electrical noise may be reduced in the conductor.

Optionally in some examples, including in at least one preferred example, the busbar assembly comprises a second collar part, extending coaxially with the axis, and radially outer to the axis, and wherein the second collar part is mechanically connected to the first collar part, and radially outer to at least a portion of the first collar part, the second collar part comprises a second flange extending coaxially with the axis in the first direction, and radially outer to the axis, and wherein the second layer of the bus bar is fitted radially outer to the second flange. A technical benefit may include in at least some examples, by fitting the second layer radially outer to the second flange, whilst the conductor extends radially inner to the second flange, a relative radial movement between the conductor and the second layer may occur whilst maintaining a fit between the second layer and the connector.

Optionally in some examples, including in at least one preferred example, the second collar part comprises a material having a stiffness greater than or equal to 60 GPa. A technical benefit may include that the second collar part may support the first collar part. Furthermore, in at least some examples the second collar part may support the bus bar when the connector is fixed to an external component. In at least some examples the stiffness may be defined as the modulus of elasticity.

Optionally in some examples, including in at least one preferred example, the bus bar assembly further comprises a second clamping member configured to circumferentially clamp the second layer of the bus bar to the second flange. A technical benefit may include radial movement of the second layer in a direction away from the second flange may be restricted. Additionally, in at least some examples relative axial movement between the second layer and the second flange may be restricted due to friction. In at least some examples the first clamping member may comprise a hose clamp. Alternatively, in at least some examples the second layer may be fixed to the second flange by welding, or by use of adhesive.

Optionally in some examples, including in at least one preferred example, the first collar part comprises a first hole, and the second collar part comprises a second hole in alignment with the first hole and wherein the second collar part is connected to the first collar part via a fastener extending through the first hole and the second hole. A technical benefit may include a fixation between the first collar part and the second collar part may be achieved.

Optionally in some examples, including in at least one preferred example, the first hole and the second hole extend in the first direction.

Optionally in some examples, including in at least one preferred example, the bus bar assembly comprises a first sealing element located axially between the first collar part and the second collar part along the axis, and configured to seal therebetween. A technical benefit may include that sealing may be achieved between the first collar part and the second collar part. Furthermore, in at least some examples the first collar part and the second collar part and the first sealing element may be secured via the fastener.

Optionally in some examples, including in at least one preferred example, the first sealing element is radially spaced from the first hole with respect to the axis, preferably radially inwards from the first hole such that the first sealing element is radially closer to the axis than the first hole.

Optionally in some examples, including in at least one preferred example, the connector is configured to be attached to an external component via the second end thereof, and wherein a circumferential portion of the second collar part, extending circumferentially about the axis, is configured to mechanically contact the external component.

Optionally in some examples, including in at least one preferred example, the second collar part comprises a third hole, configured for attaching the connector to the external component. A technical benefit may include that attachment of the connector to an external component may be achieved.

Optionally in some examples, including in at least one preferred example, the third hole extends axially along the axis.

Optionally in some examples, including in at least one preferred example, a second sealing element configured to be located axially between the second collar part and the external component along axis, and configured to seal therebetween. A technical benefit may include a sealing between the connector and an external component may be achieved. Furthermore, in at least some the connector and the external component and the second sealing element may be secured via for example attaching the connector to an external component via the third hole.

Optionally in some examples, including in at least one preferred example, wherein the second sealing element is radially spaced from the second hole with respect to the axis, preferably radially inwards from the second hole such that the second sealing element is radially closer to the axis than the second hole.

Optionally in some examples, including in at least one preferred example, the second flange is axially spaced from the first flange in the first direction. A technical benefit may include in at least some cases the bus bar and the connector may be more easily assembled.

Optionally in some examples, including in at least one preferred example the second flange is radially spaced from the first flange with respect to the axis, such that the second flange is radially further away from axis than the first flange. A technical benefit may include in at least some cases the bus bar and the connector may be more easily assembled.

Optionally in some examples, including in at least one preferred example, a portion of the second collar part is radially spaced from a radially outermost portion of the first collar part such that the portion of the second collar part is radially further away from the axis than the radially outermost portion of the first collar part. A technical benefit may include in at least some examples the first collar part may be surrounded by the second collar part such that the first collar part may be protected by said second collar part.

According to a second aspect of the disclosure, a vehicle comprising the bus bar assembly. The second aspect of the disclosure may seek to provide a vehicle comprising a bus bar assembly having an improved connection between the first layer and the connector. A technical benefit may include in at least some examples a relative movement between the conductor and the first layer may occur whilst maintaining a connection between the first layer and the connector.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of a vehicle according to an example.
**FIG. 2a** is a sectional view of a bus bar assembly according to an example.
**FIG. 2b** is an additional view of the bus bar assembly according to the example of **FIG. 2a**.
**FIG. 3** is a perspective view of a bus bar assembly according to an example.
**FIG. 4** is another view of **FIG. 2**, according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

It is often necessary for a bus bar to comprise an outer layer, for the purpose of protecting a conductor thereof, which is configured to carry a current. In at least some examples the outer layer may be for the purpose of electrical insulating the conductor. In at least some examples the outer layer may be for the purpose of protecting the conductor from moisture. For example, protection of the conductor may be required when the bus bar is configured to extend in an external environment, such as between two enclosed volumes.

Furthermore, it may be convenient to have a bus bar assembly comprising a bus bar and a connector, such that the bus bar may be connected mechanically and/or electrically to a further component. In at least come examples the connector may be connected mechanically to an external component, for example a housing such that the conductor may be connected electrically to a further conductor located inside said housing.

In at least some examples the outer layer of the bus bar may be configured to be connected to the connector, such that a sealing may be achieved, for example between an external environment, and the conductor and an enclosed volume, enclosed by a further component the connector is configured to be fixed to.

There may exist a problem whereby an outer layer of a bus bar may not be adequately connected to the connector. For example, the bus bar assembly may be connected to at least one further component which is prone to movements, such as vibrations, whereby the movements of the external component may cause a relative movement between the bus bar and the connector. Therefore, there is a need to develop improved technology relating to such bus bar assemblies.

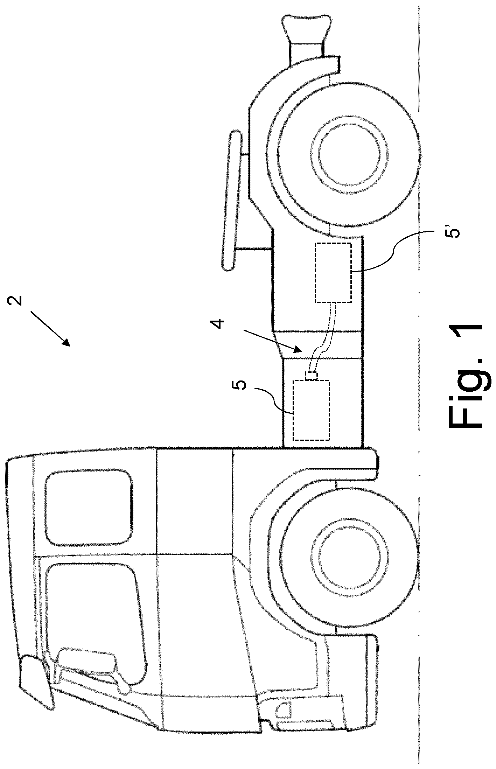

**FIG. 1** is an exemplary vehicle 2 according to an example, in the form of a truck 2. Whilst the shown aspect comprises a truck 2, the vehicle may comprise any type of vehicle such as a car, bus, industrial vehicle, marine vessel, aircraft, etc. In the shown example the vehicle 2 comprises a bus bar assembly 4.

Furthermore, the bus bar assembly 4 may be used for non-vehicle applications, for example a stationary installation.

In the shown example the bus bar assembly 4 is mechanically connected to an external component 5 and a further external component 5'. Furthermore, in the shown example the bus bar assembly 4 extends between the external component 5 and the further external component 5'

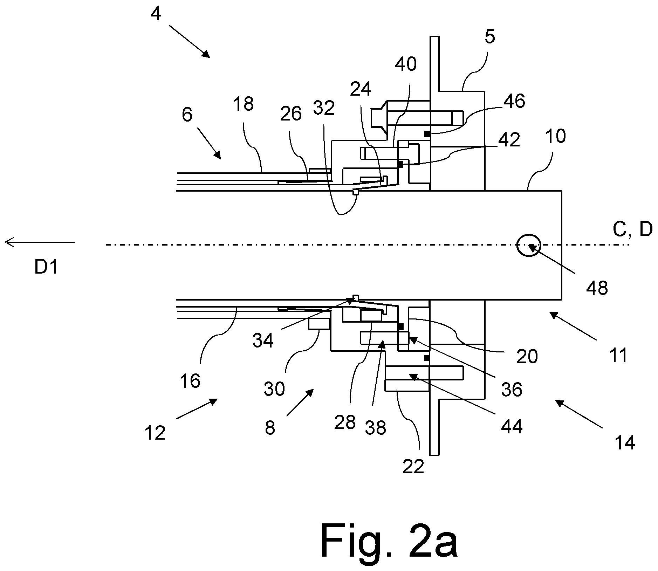

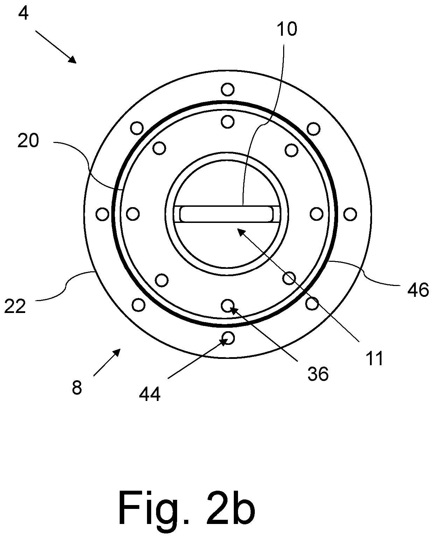

**FIG. 2a** is a sectional view of a bus bar assembly 4 according to an example. Furthermore, **FIG. 2b** is an additional view of the bus bar assembly according to the example of **FIG. 2a**.

In the shown example the bus bar assembly 4, comprises a bus bar 6 and a connector 8. The bus bar 6 comprises a conductor 10, extending axially along a centerline C. In the shown example the bus bar 6 comprises a circular cross-section. In at least some examples the bus bar 6 may comprise any cross-section, such as square, rectangle, etc. In at least some examples the bus bar 6 comprises a bus bar pipe. In the shown example the center line C is configured to extend through the centroid of the cross-section. Furthermore, in at least some examples the bus bar 6 is configured to extend along a curved line. In at least some examples the bus bar 6 may be flexible. The conductor 10 may comprise for example copper, brass or aluminium. In the shown example the conductor 10 is solidly formed. Alternatively, in at least some examples the conductor 10 may be hollow. The cross-section of the conductor 10 may be sized such that it may be suitable for carrying a high voltage, wherein the high voltage may be, for example in the range of 30-1000 VAC or 60-1500 VDC.

In the shown example the bus bar 6 further comprises a first layer 16, extending coaxially with the centerline C, and radially outer to the conductor 10 with respect to the centerline C. In the shown example the first layer 16 of the bus bar 6 comprises an electrical insulator. The electrical insulator may comprise a plastic such as polypropylene, PVC, etc. In at least some examples the first layer 16 may be waterproof. In at least some examples the first layer 16 may comprise a non-porous material, such that it is waterproof, and/or may comprise a waterproof coating. In at least some cases first layer 16 may be elastically deformable.

In the shown example the connector 8 comprises a first end 12 and a second end 14, the connector 8 extending along an axis D, between the first end 12 and the second end 14. In the shown example at least a portion of the centerline C coincides with the axis D. In at least some examples the centerline C may be movable relative to the axis D.

The connector 8 further comprises a first collar part 20, extending coaxially with the axis D, and radially outer to the axis D, and wherein a portion of the conductor 10 extends radially inner to the first collar part 20 with respect to the axis D, such that the conductor 10 extends through the first collar part 20 via the first end 12 of the connector 8. In the shown example the first collar part 20 is sized such that it is fitted to said conductor 10. In the shown example a first direction D1 acts along the axis D from the second end 14 towards the first end 12.

In the shown example the first collar part 20 comprises a first flange 24 extending coaxially with the axis D in the first direction D1, and radially outer to the axis D, and wherein the first layer 16 of the bus bar 6 is fitted radially outer to the first flange 24. In the shown example the first flange 24 is tapered along the first direction D1.

In the shown example the first collar part 20 comprises an electrical insulator. The first collar part 20 may comprise for example a plastic such as polypropylene, PVC, etc. In at least some examples the first collar part 20 may comprise a non-porous material, such that it is waterproof, and/or may comprise a waterproof coating. In at least some cases the first collar part 20 may be elastically deformable.

In the shown example the bus bar assembly 4 further comprises a first clamping member 28 configured to circumferentially clamp the first layer 16 of the bus bar 6 to the first flange 24. The first clamping member 28 may comprise for example a hose clamp. In at least some examples the first flange 24 may comprise at least one radially extending feature 29, such as a groove or the like, configured to restrict axial movement of the first clamping member 28, relative to the first flange 24, along the axis D. Alternatively, in at least some examples the first layer 16 may be fixed to the first flange 24 by welding, or by use of adhesive. In at least some examples the first flange 24 is continuously formed about the axis D. Alternatively, in at least some examples the first flange 24 may comprise an axially extending slot. Furthermore, in at least some examples the first flange 24 may comprise a plurality of axially extending slots arranged about the circumference thereof.

In the shown example the first flange 24 comprises a protrusion 32 extending radially inwards towards the axis D and the conductor 10 of the bus bar 6 comprises a complementary recess 34 and wherein the protrusion 32 extends into the recess 34. In the shown example the protrusion 32 and the complementary recess 34 are continuously formed about the axis D and the center line C, respectively. Furthermore in at least some examples the first flange 24 and the conductor 10 may comprise at least one further complementary pair of discontinuously formed features, wherein said further complementary pair of discontinuously formed features may be formed with said protrusion 32 and said recess 34, or separately thereto.

In at least some examples at least a portion of the conductor 10 may be configured as a terminal 11. In the shown example the terminal 11 forms an end to the conductor 10. In the shown example the terminal 11 comprises a portion of the conductor 10 having a reduced cross-sectional area. Furthermore, in the shown example the cross-section of the terminal 11 transitions from the circular cross-section, as described with reference to the conductor 10, to a rectangular cross-section. The rectangular cross-section may be configured such that the terminal 11 comprises a planar surface for interfacing with a further conductor (not shown). In at least some examples the cross-section may be any such cross-section such that the terminal comprises a planar surface. In at least some examples the terminal 11 may comprise a circular cross-section wherein a planar end face of the terminal 11 is configured for interfacing therewith. In the shown example at least a portion of the terminal 11 coincides with the connector 8 along the axis D. Furthermore, in the shown example the second end 14 may be spaced from at least a portion of the terminal 11 in the first direction D1 along the axis D. In the shown example the terminal 11 comprises a portion of the conductor 10 not surrounded by the first layer 16.

In the shown example the terminal 11 comprises a terminal hole 48. In the shown example the terminal hole 48 extends through the terminal 11. The terminal hole 48 is configured for mechanically connecting the terminal 11 to the further conductor, such that the conductor 10 and the further conductor are electrically connected. In at least some examples the further conductor may comprise a further terminal hole, and wherein a fastener may be inserted through the terminal hole 48 and the further terminal hole, such that the conductor 10 and the further conductor may be mechanically connected. In at least some examples a press nut may be inserted into the terminal hole 48 and used to connect the conductor 10 and the further electrical conductor. Alternatively, in at least some examples, one of the conductor 10 and the further conductor may comprise a post, and the other of the conductor 10 and the further conductor may comprise a hole configured to receive the post, and the conductor 10 and the further conductor may be fixed by attaching a nut, or the like to the post.

In the shown example the bus bar 6 comprises a second layer 18, extending coaxially with the centerline C, and radially outer to the first layer 16 with respect to the centerline C. In the shown example the second layer 18 of the bus bar 6 is configured as an electromagnetic shield. The second layer 18 may comprise for example copper, aluminium, conducting polymer, or the like, formed as a tape, braided wire, etc.

Furthermore, in the shown example the busbar assembly 4 comprises a second collar part 22, extending coaxially with the axis D, and radially outer to the axis D.

Furthermore, the second collar part 22 is mechanically connected to the first collar part 20, and radially outer to at least a portion of the first collar part 20.

In the shown example the second collar part 22 comprises a second flange 26 extending coaxially with the axis D in the first direction D1, and radially outer to the axis D, and wherein the second layer 18 of the bus bar 6 is fitted radially outer to the second flange 26. In the shown example the second flange 26 is tapered along the first direction D1. In the shown example the second flange 26 is fitted radially outer to the first layer 16.

In the shown example the second collar part 22 comprises a material having a stiffness greater than or equal to 60 GPa. In at least some examples the stiffness may be defined as the modulus of elasticity. In at least some examples the material may comprise a metal, such as aluminium, or a plastic.

In the shown example the first collar part 20 comprises a first hole 36, and the second collar part 22 comprises a second hole 38 in alignment with the first hole 36 and wherein the second collar part 22 is connected to the first collar part 20 via a fastener 40 extending through the first hole 36 and the second hole 38. In the shown example the first hole 36 and the second hole 38 extend in the first direction D 1. In the shown example the first hole 36 and the second hole 38 are formed on a portion of the first collar part 20 and a portion of the second collar part 22, respectively, and wherein the portion of the second collar part 22 is arranged in the first direction relative to a portion of the first collar part 20. In at least some examples the example the first hole 36 and the second hole 38 extend in a direction acting perpendicular to the first direction D 1. Furthermore, in the shown example the first collar part 20, and the second collar part 22 comprise a plurality of first holes 36 and second holes 38, respectively, circumferentially arranged about the axis D. In at least some examples one of the first collar part 20 and the second collar part 22 may comprise a hole and the of the first collar part 20 and the second collar part 22 may comprise a post or the like, configured to pass through the hole such that the second collar part 22 may connected to the first collar part 20 via a fastener 40, such as a nut.

In the shown example the bus bar assembly 4 further comprises a first sealing element 42 located axially between the first collar part 20 and the second collar part 22 along the axis D and configured to seal therebetween. The first sealing element 42 may comprise a ring-shaped element extending about the axis D. Where the first hole 36 and the second hole 38 extend in a direction acting perpendicular to the first direction D1 the first sealing element 42 may be located radially between the first collar part 20 and the second collar part 22 relative to the axis D. In at least some examples the first collar part 20 and/or the second collar part 22 may comprise grooves and/or cut-outs configured to position the first sealing element 42.

In the shown example the first sealing element 42 is radially spaced from the first hole 36 with respect to the axis D, preferably radially inwards from the first hole 36 such that the first sealing element 42 is radially closer to the axis D than the first hole 36.

In the shown example a second clamping member 30 configured to circumferentially clamp the second layer 18 of the bus bar 6 to the second flange 26. The second clamping member 30 may comprise for example a hose clamp. In at least some examples the second flange 26 may comprise at least one radially extending feature, such as a groove or the like, configured to restrict axial movement of the second clamping member 30, relative to the second flange 26, along the axis D. Alternatively, in at least some examples the second layer 18 may be fixed to the second flange 26 by welding, or by use of adhesive.

In the shown example the connector 8 is configured to be attached to an external component 5 via the second end 14 thereof, and wherein a circumferential portion of the second collar part 22, extending circumferentially about the axis D, is configured to mechanically contact the external component 5. The external component 5 may comprise a housing or the like having an opening formed therein, whereby the circumferential portion of the second collar part 22 is configured to surround the opening. Furthermore, in at least some examples the terminal 11 is configured to extend through the opening. Where the external component 5 comprises a housing, a further bus bar, electrical wiring, or the like, configured to be electrically connected to the terminal 11 of the bus bar assembly 4, may be contained therein. Alternatively, in at least some examples the external component 5 may comprise a further bus bar assembly, as described herein.

In the shown example the second collar part 22 comprises a third hole 44, configured for attaching the connector 8 to the external component 5. Furthermore, the third hole 44 extends axially along the axis D. In at least some examples the third hole 44 may extend in a direction perpendicular to the axis D. Alternatively, in at least some examples the second collar part 22 may comprise a post, or the like, configured for attaching the connector 8 to the external component 5.

In the shown example the bus bar assembly 4 comprises a second sealing element 46 configured to be located axially between the second collar part 22 and the external component along axis D, and configured to seal therebetween. The second sealing element 46 may comprise a ring-shaped element extending about the axis D. Furthermore, the second sealing element 46 is radially spaced from the third hole 44 with respect to the axis D, preferably radially inwards from the third hole 44 such that the second sealing element 46 is radially closer to the axis D than the third hole 44. In at least some examples the second collar part 22 may comprise grooves and/or cut-outs configured to position the second sealing element 46.

In the shown example the second flange 26 is axially spaced from the first flange 24 in the first direction D 1. In at least some examples the first flange 24 and the second flange 26 may coincide along the axis D. Furthermore in at least some examples at least a portion of the first flange 24 may be spaced from the second flange 26 in the first direction D 1.

Furthermore, the second flange 26 is radially spaced from the first flange 24 with respect to the axis D, such that the second flange 26 is radially further away from axis D than the first flange 24. In at least some examples the first flange 24 and the second flange 26 may be spaced equally from the axis D.

In the shown example a portion of the second collar part 22 is radially spaced from a radially outermost portion of the first collar part 20 such that the portion of the second collar part 22 is radially further away from the axis D than the radially outermost portion of the first collar part 20. Furthermore, in the shown example the second flange 26 is spaced from the radially outermost portion of the first collar part 20 in the first direction D1 and the and the second collar part 22 is configured to mechanically contact the external component 5, such that the first collar part 20 is enclosed by the second collar part 20, the second layer 18, and the external component 5.

In the shown example the first end 12 and the second end 14 of the connector 8 are formed by the second collar part 22. In at least some examples the second end 14 of the connector 8 may be formed by the first collar part 20, such that the first collar part 20 extends through, for example an opening formed in the external component 5.

In at least some examples the bus bar 6 may comprise a third layer, wherein said third layer may extending coaxially with the centerline C, and radially outer to the second layer 18 with respect to the centerline C. Where the bus bar 6 comprises a third layer the third layer may be fitted radially outer to the second flange 26, and may be fitted to the second flange by the second clamping member 30. Alternatively, the second collar part 22 may comprise a further second flange, or the bus bar assembly 4 may comprise a third collar part comprising a third flange, and wherein the connector may be connected to the external component 5 via the third collar part. Furthermore, it may be possible to form a bus bar assembly comprising a bus bar having any number of layers wherein each of layers may be fitted to any number of flanges and/or collar parts.

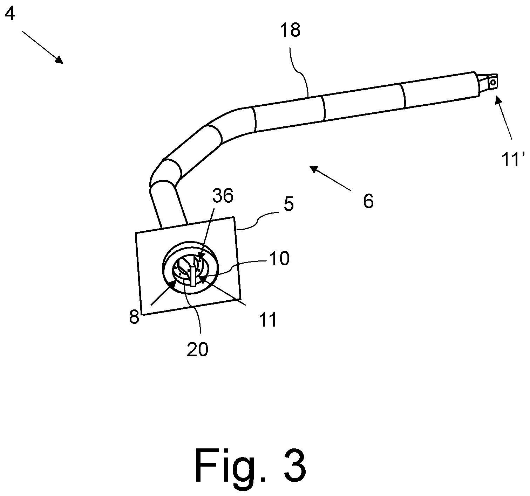

**FIG. 3** is a perspective view of a bus bar assembly 4 according to an example. In the shown example the bus bar assembly 4 comprises a terminal 8 and a further terminal 11', and wherein the terminals 11, 11' form two ends of the bus bar 6.

In the shown example the bus bar assembly 4 comprises a connector 8 located at the terminal 11, as described with reference to **Fig. 2a-2b****.** In at least some examples the bus bar assembly 4 may comprise a further connector located at the further terminal 8' and configured similarly to the connector 8.

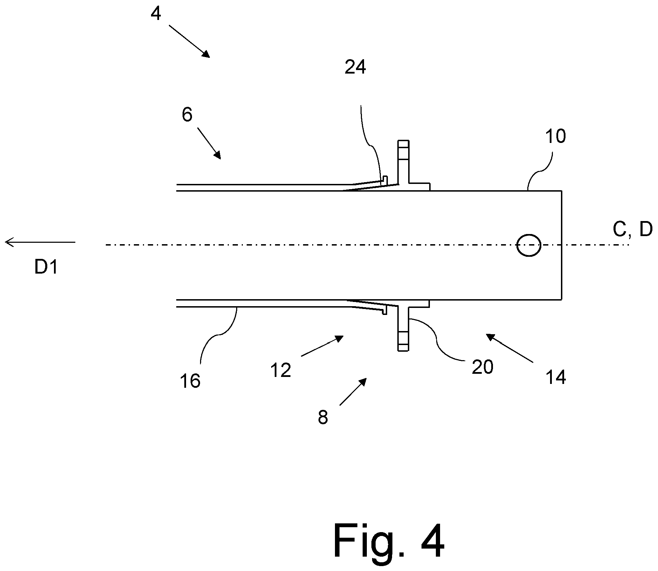

**FIG. 4** is another view of **FIG. 2a**, according to an example. A bus bar assembly 4, comprising a bus bar 6 and a connector 8. The bus bar 6 comprises a conductor 10 extending axially along a centerline C, a first layer 16, extending coaxially with the centerline C, and radially outer to the conductor 10 with respect to the centerline C. The connector 8 comprises a first end 12 and a second end 14, the connector 8 extending along an axis D, between the first end 12 and the second end 14. The connector 8 further comprises a first collar part 20, extending coaxially with the axis D, and radially outer to the axis D. A portion of the conductor 10 extends radially inner to the first collar part 20 with respect to the axis D, such that the conductor 10 extends through the first collar part 20 via the first end 12 of the connector 8. A first direction D1 acts along the axis D from the second end 14 towards the first end 12 and the first collar part 20 comprises a first flange 24 extending coaxially with the axis D in the first direction D1, and radially outer to the axis D, and wherein the first layer 16 of the bus bar 6 is fitted radially outer to the first flange 24.

In the following, possible features and feature combinations of the present disclosure are presented as a list of examples.

**Example 1:** a bus bar assembly 4, comprising a bus bar 6 and a connector 8, the bus bar 6 comprising a conductor 10, extending axially along a centerline C, a first layer 16, extending coaxially with the centerline C, and radially outer to the conductor 10 with respect to the centerline C, wherein the connector 8 comprises a first end 12 and a second end 14, the connector 8 extending along an axis D, between the first end 12 and the second end 14, the connector 8 further comprising a first collar part 20, extending coaxially with the axis D, and radially outer to the axis D, and wherein a portion of the conductor 10 extends radially inner to the first collar part 20 with respect to the axis D, such that the conductor 10 extends through the first collar part 20 via the first end 12 of the connector 8, wherein a first direction D1 acts along the axis D from the second end 14 towards the first end 12 and the first collar part 20 comprises a first flange 24 extending coaxially with the axis D in the first direction D1, and radially outer to the axis D, and wherein the first layer 16 of the bus bar 6 is fitted radially outer to the first flange 24.

**Example 2:** the bus bar assembly 4 of example 1, wherein the first layer 16 of the bus bar 6 comprises an electrical insulator.

**Example 3:** the bus bar assembly 4 of any of the preceding examples, wherein the first collar part 20 comprises an electrical insulator.

**Example 4:** the bus bar assembly 4 of any of the preceding examples, further comprising a first clamping member 28 configured to circumferentially clamp the first layer 16 of the bus bar 6 to the first flange 24.

**Example 5:** the bus bar assembly 4 of any of the preceding examples, wherein the first flange 24 comprises a protrusion 32 extending radially inwards towards the axis D and the conductor 10 of the bus bar 6 comprises a complementary recess 34 and wherein the protrusion 32 extends into the recess 34.

**Example 6:** the bus bar assembly 4 of any of the preceding examples, wherein the bus bar 6 comprises- a second layer 18, extending coaxially with the centerline C, and radially outer to the first layer 16 with respect to the centerline C.

**Example 7:** the bus bar assembly 4 of example 6, wherein the second layer 18 of the bus bar 6 is configured as an electromagnetic shield.

**Example 8:** the bus bar assembly 4 of any of examples 6-7, wherein the busbar assembly 4 comprises a second collar part 22, extending coaxially with the axis D, and radially outer to the axis D, and wherein the second collar part 20 is mechanically connected to the first collar part 20, and radially outer to at least a portion of the first collar part 20, the second collar part 22 comprises a second flange 26 extending coaxially with the axis D in the first direction D1, and radially outer to the axis D, and wherein the second layer 18 of the bus bar 6 is fitted radially outer to the second flange 26.

**Example 9:** the bus bar assembly 4 of example 8, wherein the second collar part 22 comprises a material having a stiffness greater than or equal to 60 GPa.

**Example 10:** the bus bar assembly 4 of any of examples 8-9, further comprising a second clamping member 30 configured to circumferentially clamp the second layer 18 of the bus bar 6 to the second flange 26.

**Example 11:** the bus bar assembly 4 of any of examples 8-10, wherein the first collar part 20 comprises a first hole 36, and the second collar part 22 comprises a second hole 38 in alignment with the first hole 36 and wherein the second collar part 22 is connected to the first collar part 20 via a fastener 40 extending through the first hole 36 and the second hole 38.

**Example 12:** the bus bar assembly 4 of example 11, wherein the first hole 36 and the second hole 38 extend in the first direction D1.

**Example 13:** the bus bar assembly 4 of any of examples 8-12, comprising a first sealing element 42 located axially between the first collar part 20 and the second collar part 22 along the axis D, and configured to seal therebetween.

**Example 14:** the bus bar assembly 4 of example 13, when dependent on claim 11, wherein the first sealing element 42 is radially spaced from the first hole 36 with respect to the axis D, preferably radially inwards from the first hole 36 such that the first sealing element 42 is radially closer to the axis D than the first hole 36.

**Example 15:** the bus bar assembly 4 of any of examples 8-14, wherein the connector 8 is configured to be attached to an external component 5 via the second end 14 thereof, and wherein a circumferential portion of the second collar part 22, extending circumferentially about the axis D, is configured to mechanically contact the external component 5.

**Example 16:** the bus bar assembly 4 of example 15, wherein the second collar part 22 comprises a third hole 44, configured for attaching the connector 8 to the external component 5.

**Example 17:** the bus bar assembly 4 any of examples 15-16, wherein the third hole 44 extends axially along the axis D.

**Example 18:** the bus bar assembly 4 of any of examples 15-17, comprising a second sealing element 46 configured to be located axially between the second collar part 22 and the external component along axis D, and configured to seal therebetween.

**Example 19:** the bus bar assembly 4 of example 18, wherein the second sealing element 46 is radially spaced from the third hole 44 with respect to the axis D, preferably radially inwards from the third hole 44 such that the second sealing element 46 is radially closer to the axis D than the third hole 44.

**Example 20:** the bus bar assembly 4 of any of examples 8-19, wherein the second flange 26 is axially spaced from the first flange 24 in the first direction D1.

**Example 21:** the bus bar assembly 4 of any of examples 8-20, wherein the second flange 26 is radially spaced from the first flange 24 with respect to the axis D, such that the second flange 26 is radially further away from axis D than the first flange 24.

**Example 22:** the bus bar assembly 4 of any of examples 8-21, wherein a portion of the second collar part 22 is radially spaced from a radially outermost portion of the first collar part 20 such that the portion of the second collar part 22 is radially further away from the axis D than the radially outermost portion of the first collar part 20.

**Example 23:** a vehicle 2 comprising the bus bar assembly 4 according to any of examples 1-22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A bus bar assembly (4), comprising a bus bar (6) and a connector (8), said bus bar (6) comprising:
- a conductor (10), extending axially along a centerline (C),
- a first layer (16), extending coaxially with said centerline (C), and radially outer to said conductor (10) with respect to said centerline (C),
wherein said connector (8) comprises a first end (12) and a second end (14), said connector (8) extending along an axis (D), between said first end (12) and said second end (14), said connector (8) further comprising:
- a first collar part (20), extending coaxially with said axis (D), and radially outer to said axis (D), and wherein a portion of said conductor (10) extends radially inner to said first collar part (20) with respect to said axis (D), such that said conductor (10) extends through said first collar part (20) via said first end (12) of said connector (8),
wherein a first direction (D1) acts along said axis (D) from said second end (14) towards said first end (12) and said first collar part (20) comprises a first flange (24) extending coaxially with said axis (D) in said first direction (D1), and radially outer to said axis (D), and wherein said first layer (16) of said bus bar (6) is fitted radially outer to said first flange (24).

2. The bus bar assembly (4) of claim 1, wherein said first layer (16) of said bus bar (6) comprises an electrical insulator.

3. The bus bar assembly (4) of any of the preceding claims, wherein said first collar part (20) comprises an electrical insulator.

4. The bus bar assembly (4) of any of the preceding claims, further comprising a first clamping member (28) configured to circumferentially clamp said first layer (16) of said bus bar (6) to said first flange (24).

5. The bus bar assembly (4) of any of the preceding claims, wherein said first flange (24) comprises a protrusion (32) extending radially inwards towards said axis (D) and said conductor (10) of said bus bar (6) comprises a complementary recess (34) and wherein said protrusion (32) extends into said recess (34).

6. The bus bar assembly (4) of any of the preceding claims, wherein said bus bar (6) comprises a second layer (18), extending coaxially with said centerline (C), and radially outer to said first layer (16) with respect to said centerline (C).

7. The bus bar assembly (4) of claim 6, wherein said second layer (18) of said bus bar (6) is configured as an electromagnetic shield.

8. The bus bar assembly (4) of any of claims 6-7, wherein said busbar assembly (4) comprises a second collar part (22), extending coaxially with said axis (D), and radially outer to said axis (D), and wherein said second collar part (20) is mechanically connected to said first collar part (20), and radially outer to at least a portion of said first collar part (20), said second collar part (22) comprises a second flange (26) extending coaxially with said axis (D) in said first direction (D1), and radially outer to said axis (D), and wherein said second layer (18) of said bus bar (6) is fitted radially outer to said second flange (26).

9. The bus bar assembly (4) of claim 8, further comprising a second clamping member (30) configured to circumferentially clamp said second layer (18) of said bus bar (6) to said second flange (26).

10. The bus bar assembly (4) of any of claims 8-9, wherein said first collar part (20) comprises a first hole (36), and said second collar part (22) comprises a second hole (38) in alignment with said first hole (36) and wherein said second collar part (22) is connected to said first collar part (20) via a fastener (40) extending through said first hole (36) and said second hole (38).

11. The bus bar assembly (4) of any of claims 8-10, comprising a first sealing element (42) located axially between said first collar part (20) and said second collar part (22) along said axis (D), and configured to seal therebetween.

12. The bus bar assembly (4) of any of claims 8-11, wherein said connector (8) is configured to be attached to an external component (5) via said second end (14) thereof, and wherein a circumferential portion of said second collar part (22), extending circumferentially about said axis (D), is configured to mechanically contact said external component (5).

13. The bus bar assembly (4) of claim 12, wherein said second collar part (22) comprises a third hole (44), configured for attaching said connector (8) to said external component (5).

14. The bus bar assembly (4) of any of claims 12-13, comprising a second sealing element (46) configured to be located axially between said second collar part (22) and said external component along axis (D), and configured to seal therebetween.

15. A vehicle (2) comprising the bus bar assembly (4) according to any of claims 1-14.
